# FASCICULE DE BREVET EUROPEEN

(11) **EP 2 903 120 B1**
(45) Date de publication et mention de la délivrance du brevet: **10.04.2019**
(21) Numéro de dépôt: 15153031.8
(22) Date de dépôt: 29.01.2015
(51) Int. Cl.: H02J 5/00, G01P 3/487

(54) **DISPOSITIF DE DÉTECTION DE SOUS-VITESSE, SYSTÈME DE VENTILATION ET VÉHICULE ASSOCIÉS**
VORRICHTUNG ZUR ERKENNUNG VON UNTERDREHZAHL, ENTSPRECHENDES BELÜFTUNGSSYSTEM UND ENTSPRECHENDES FAHRZEUG
Underspeed detection device, associated ventilation system and vehicle

(30) Priorité: 30.01.2014 FR 1450732
(43) Date de publication de la demande: 05.08.2015
(73) Titulaire: TECHNOFAN, 31700 Blagnac (FR)
(72) Inventeur: Toutain, Pascal, 31700 Blagnac (FR); Longere, Xavier, 31700 Blagnac (FR); Bonnard, Samuel, 31880 La Salvetat Saint Gilles (FR)
(74) Mandataire: Lavoix

(56) Documents cités:
- WO-A1-2009/100885
- US-A1- 2005 150 281
- US-A1- 2012 293 115
- MONICA ZOLOG ET AL: "Characterization of Spiral Planar Inductors Built on Printed Circuit Boards", 2007 30TH INTERNATIONAL SPRING SEMINAR ON ELECTRONICS TECHNOLOGY (ISSE), 1 mai 2007 (2007-05-01), pages 308-313, XP055158271, DOI: 10.1109/ISSE.2007.4432869 ISBN: 9871424412181

## Description

La présente invention concerne un dispositif de détection de sous-vitesse d'un moteur comportant un stator et un rotor mobile par rapport au stator, le dispositif de détection comprenant des moyens de détection propres à générer un signal électrique de rotation représentatif de la vitesse de rotation du rotor, et des moyens électroniques d'analyse propres à analyser le signal de rotation pour détecter une situation de sous-vitesse.

L'invention s'applique à la commande de la vitesse de rotation du rotor d'un moteur, par exemple un moteur d'un système de ventilation embarqué à bord d'un véhicule.

De tels systèmes de ventilation sont généralement dédiés à des fonctions telles que le refroidissement, l'extraction de gaz ou la ventilation à destination des passagers du véhicule.

En général, un système de ventilation doit assurer un débit de gaz supérieur à un débit minimal prédéterminé. Par conséquent, la vitesse de rotation du rotor du moteur du système de ventilation doit être supérieure à une vitesse minimale prédéterminée.

L'invention s'applique notamment à la détection de sous-vitesse du moteur.

Par « sous-vitesse », on entend au sens de la présente invention une situation dans laquelle la vitesse de rotation du rotor du moteur est inférieure à la vitesse minimale prédéterminée.

Il est connu d'utiliser des dispositifs de détection de sous-vitesse. comme par exemple le décrit le document US 2012/0293115 A1 Ces dispositifs comprennent généralement une roue phonique, solidaire du rotor du moteur, et un détecteur à effet Hall, solidaire de son stator et disposé en regard de la roue phonique. La roue phonique comporte un élément magnétique propre à émettre un champ magnétique, par exemple un aimant permanent. Le détecteur est propre à détecter le passage de l'élément magnétique et générer un signal électrique de rotation représentatif de la vitesse de rotation du rotor. Ces dispositifs de détection de sous-vitesse comportent également des moyens d'analyse électroniques pour l'analyse du signal de rotation et la détection de sous-vitesse.

De façon classique, le courant d'alimentation de ces dispositifs de détection provient du réseau électrique de bord, qui est généralement triphasé, haute tension (115VAC ou 230VAC) à fréquence et tension variables. Les caractéristiques électriques de ce type de réseau triphasé telles que le déséquilibre des phases et des tensions, les surtensions et les interruptions de tension impliquent la mise en oeuvre de dispositifs électroniques complexes et à haut niveau de robustesse pour alimenter, de façon isolée, les moyens d'analyse en courant continu. Ceci implique le recours à un transformateur, pour assurer l'isolement électrique, et à des dispositifs de protection et de filtrage électriques, pour alimenter les moyens d'analyse en courant continu depuis le réseau électrique de bord triphasé. La présence d'un transformateur et des dispositifs de protection et de filtrage électriques réduit les possibilités de miniaturisation et d'allégement du dispositif de détection. Or, le volume et la masse sont des paramètres critiques des systèmes embarqués.

Un but de l'invention est de proposer un dispositif de détection de sous-vitesse d'un moteur qui est plus compact, plus léger et indépendant des caractéristiques du réseau électrique de bord triphasé, ce qui contribue à augmenter la fiabilité du dispositif.

A cet effet, l'invention a pour objet un dispositif de détection de sous-vitesse d'un moteur du type précité, comportant en outre des moyens de conversion propres à convertir une partie du signal électrique de rotation en un courant d'alimentation des moyens d'analyse, et des moyens pour appliquer le courant d'alimentation aux moyens d'analyse pour leur alimentation électrique.

En effet, le courant d'alimentation des moyens d'analyse provenant du courant de rotation, la présence d'un transformateur est superflue et le dispositif est donc plus compact, plus léger, plus fiable et robuste.

Suivant des modes particuliers de réalisation, l'invention présente l'une ou plusieurs des caractéristiques suivantes, prise(s) isolément ou suivant toute combinaison techniquement possible :
- les moyens de conversion sont propres à convertir la partie du signal électrique de rotation en un courant d'alimentation sensiblement continu ;
- les moyens d'analyse sont propres à être alimentés uniquement par le courant d'alimentation provenant des moyens de conversion ;
- les moyens de détection comportent d'une part un détecteur comprenant au moins une spire fixe par rapport au stator et un élément magnétique mobile en rotation avec le rotor et au moins partiellement en regard de la ou chaque spire ;
- l'élément magnétique est un aimant permanent ;
- le détecteur comporte une pluralité de spires électriquement reliées pour former une bobine ;
- la bobine est réalisée dans un circuit imprimé multicouche.

En outre, l'invention a pour objet un système de ventilation comportant un moteur et un dispositif de détection de sous-vitesse du moteur, tel que défini ci-dessus.

En outre, l'invention a pour objet un véhicule comportant un système de ventilation tel que défini ci-dessus.

Suivant un autre aspect avantageux de l'invention, le véhicule est un aéronef.

L'invention sera mieux comprise à l'aide de la description qui va suivre, donnée uniquement à titre d'exemple non limitatif et faite en se référant aux dessins annexés sur lesquels :
- la figure 1 est un détail d'une représentation schématique d'un système de ventilation comportant un dispositif de détection selon l'invention ; et
- la figure 2 est une vue en coupe longitudinale du moteur du système de ventilation de la figure 1.

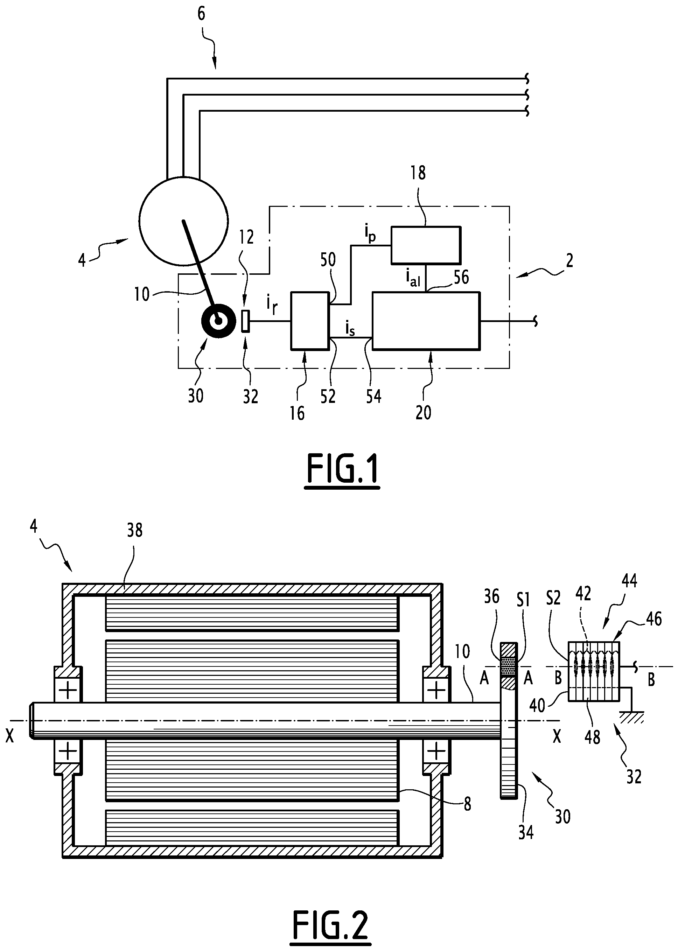

Un dispositif 2 de détection de sous-vitesse selon l'invention est représenté sur la figure 1. Le dispositif 2 de détection de sous-vitesse est propre à détecter la sous-vitesse d'un moteur 4 d'un système de ventilation, par exemple un système de ventilation pour un aéronef.

Le dispositif de détection de sous-vitesse 2 est également propre à envoyer un signal d'alerte vers des moyens de commande (non représentés) du moteur en cas de détection d'une situation de sous-vitesse.

Le moteur 4 est un moteur électrique, par exemple un moteur asynchrone. Le moteur 4 est alimenté par le réseau électrique de bord 6, par exemple un réseau électrique triphasé.

Le moteur 4 comporte un rotor 8, visible sur la figure 2, dont est solidaire un arbre 10. L'arbre 10 s'étend le long d'un axe longitudinal X-X et est propre à être entraîné en rotation autour de l'axe longitudinal X-X par le rotor 8.

Comme illustré par la figure 1, le dispositif 2 de détection de sous-vitesse comporte des moyens de détection 12 de la vitesse de rotation du rotor 8, des moyens 16 de prélèvement d'une partie d'un courant électrique, des moyens 18 de conversion d'un courant alternatif en un courant alternatif ou continu, et des moyens électroniques 20 d'analyse du spectre d'un courant alternatif.

Les moyens de détection 12 sont propres à fournir un courant électrique de rotation iᵣ alternatif. La fréquence centrale du courant de rotation iᵣ est représentative de la vitesse de rotation du rotor 8. Les moyens d'analyse 20 sont propres à comparer la fréquence centrale du courant électrique de rotation iᵣ à une fréquence de référence f₀ prédéterminée.

Comme cela apparaît sur la figure 2, les moyens de détection 12 comportent une roue phonique 30 et un détecteur 32.

La roue phonique 30 est solidaire du rotor 8 du moteur 4 et est propre à être entraînée en rotation autour de l'axe X-X par le rotor 8.

La roue phonique 30 comporte une face avant 34 et un élément magnétique 36 désaxé.

L'élément magnétique 36 est propre à émettre un champ magnétique selon un axe d'émission A-A parallèle à l'axe longitudinal X-X. l'élément magnétique 36 est un aimant permanent.

La face avant 34 délimite une surface S1 de l'élément magnétique 36.

Le détecteur 32 est propre à détecter le champ magnétique émis par l'élément magnétique 36. Le détecteur 32 est également propre à générer le courant de rotation iᵣ.

Le détecteur 32 est fixe par rapport au stator 38 du moteur 4.

Le détecteur 32 comporte une face avant 40 et une pluralité de spires 42 d'axe magnétique commun B-B parallèle à l'axe longitudinal X-X.

Les spires 42 sont électriquement reliées pour former une bobine 44 s'étendant le long de l'axe B-B.

Les bornes de la bobine 44 forment la sortie des moyens de détection 12.

Une spire de courant 42 de la bobine 44 délimite une surface S2 de la face avant 40 du détecteur 32.

Le détecteur 32 est, par exemple, constitué par un circuit imprimé 46 multicouche comportant une pluralité de couches 48 superposées. Chaque couche 48 du circuit imprimé 46 est ainsi gravée pour définir une spire de courant 42. Les spires sont connectées électriquement, par exemple par des vias, pour former la bobine 44.

Le détecteur 32 est disposé en regard de la roue phonique 30, à distance de la roue phonique 30, la surface S1 étant parallèle à la surface S2. Le détecteur 32 est disposé de telle façon qu'il existe un angle de rotation de la roue phonique 30 tel que les surfaces S1 et S2 sont en regard, les axes A-A de l'élément magnétique 36 et B-B de la bobine 44 étant confondus.

Les moyens de prélèvement 16 comportent une entrée connectée en sortie des moyens de détection 12 et deux sorties 50, 52.

Les moyens de prélèvement 16 sont propres à prélever une partie du courant de rotation iᵣ capté à leur entrée et provenant des moyens de détection 12 pour l'appliquer sous forme d'un courant prélevé iₚ à l'une de leur sorties, dite sortie d'alimentation 50.

En outre, les moyens de prélèvement 16 sont propres à appliquer à une autre de leurs sorties, dite sortie de signal 52, une autre partie du courant de rotation provenant des moyens de détection 12, sous forme d'un courant de signal iₛ de fréquence sensiblement égale à la fréquence du courant de rotation iᵣ.

Les moyens de prélèvement 16 sont par exemple un pont redresseur, une pompe de charge ou un convertisseur courant-tension.

Les moyens de conversion 18 sont reliés à la sortie d'alimentation 50 des moyens de prélèvement 16 et sont propres à convertir le courant alternatif prélevé iₚ en un courant électrique iₐₗ destiné à alimenter les moyens d'analyse 20. Le courant iₐₗ est par exemple continu.

Les moyens de conversion 18 sont par exemple un étage de régulation de tension linéaire.

Les moyens d'analyse 20 comportent deux entrées 54 et 56 et une sortie connectée aux moyens de commande du moteur 4.

Les moyens d'analyse 20 sont propres à capter à leur entrée 54, dite entrée de signal, le courant de signal iₛ provenant des moyens de prélèvement 16.

Les moyens d'analyse 20 sont également propres à capter à leur entrée 56, dite entrée d'alimentation, le courant d'alimentation iₐₗ provenant des moyens de conversion 18.

Les moyens d'analyse 20 sont propres à être alimentés uniquement par le courant d'alimentation iₐₗ provenant des moyens de conversion 18.

Les moyens d'analyse 20 sont propres à analyser le courant de signal iₛ, provenant de la sortie de signal 52 des moyens de prélèvement 16, pour en déterminer la fréquence centrale.

Les moyens d'analyse 20 sont également propres à comparer la fréquence centrale du courant de signal iₛ à la fréquence de référence prédéterminée f₀.

En fonctionnement, le moteur 4 est relié au réseau électrique 6 pour être alimenté. Le stator 8 entraîne la roue phonique 30 en rotation autour de l'axe X-X par le biais de l'arbre 10, par exemple à une vitesse de 20 000 tr/min.

Au cours du temps, la surface S1 se retrouve en regard de la surface S2 à une fréquence dépendant de la vitesse de rotation du rotor 8 du moteur 4. La bobine 44 voit alors un champ magnétique variant au cours du temps à une fréquence dépendant de la vitesse de rotation du rotor 8 du moteur 4. Le courant de rotation iᵣ est généré par induction dans la bobine 44. La fréquence du courant de rotation iᵣ dépend de la vitesse de rotation du rotor 8 du moteur 4.

Le courant électrique de rotation iᵣ est appliqué en entrée des moyens de prélèvement 16.

Une partie du courant de rotation iᵣ est prélevée par les moyens de prélèvement 16 et forme le courant prélevé iₚ disponible à la sortie d'alimentation 50 des moyens de prélèvement 16.

Les moyens de conversion 18 convertissent le courant prélevé iₚ en le courant iₐₗ d'alimentation des moyens d'analyse 20.

Le courant d'alimentation iₐₗ est appliquée par la sortie des moyens de conversion 18 à l'entrée d'alimentation 56 des moyens d'analyse 20.

L'autre partie du courant électrique de rotation iᵣ forme le courant de signal iₛ à analyser, disponible à la sortie de signal 52 des moyens de prélèvement 16.

La fréquence du courant de signal iₛ est sensiblement égale à la fréquence du courant de rotation iᵣ.

Le courant iₛ à analyser est appliquée par la sortie de signal 52 des moyens de prélèvement 16 à l'entrée de signal 54 des moyens d'analyse 20.

Les moyens électroniques d'analyse 20, alimentés par le courant d'alimentation iₐₗ, analysent le courant de signal iₛ et calculent sa fréquence centrale, représentative de la vitesse de rotation du rotor 8 du moteur 4.

Si la fréquence centrale calculée est inférieure à la fréquence de référence prédéterminée f₀, les moyens d'analyse 20 détectent une situation de sous-vitesse et envoient un signal d'alerte vers les moyens de commande (non représentés) du moteur 4.

En variante, l'axe d'émission A-A de l'élément magnétique 36 n'est pas parallèle à l'axe longitudinal X-X.

Par exemple, la direction du champ magnétique est perpendiculaire à l'axe longitudinal X-X. Le détecteur 32 est agencé de sorte qu'il existe un angle de rotation de la roue phonique 30 tel que les axes A-A de l'élément magnétique 36 et B-B de la bobine 44 sont confondues, par exemple en disposant le détecteur 32 de sorte que l'axe B-B soit perpendiculaire à l'axe longitudinal X-X.

## Revendications

1. Système de ventilation comportant un moteur (4) et un dispositif (2) de détection de sous-vitesse d'un moteur (4) comportant un stator (38) et un rotor (8) mobile en rotation autour d'un axe longitudinal (X-X) par rapport au stator (38), le dispositif de détection (2) comprenant des moyens (12) de détection propres à générer un signal électrique (iᵣ) de rotation représentatif de la vitesse de rotation du rotor (8), et des moyens électroniques (20) d'analyse propres à analyser le signal de rotation (iᵣ) pour détecter une situation de sous-vitesse dans laquelle la vitesse de rotation du rotor (8) est inférieure à une vitesse minimale prédéterminée nécessaire pour que le système de ventilation assure un débit minimal prédéterminé devant être assuré par le système de ventilation, et envoyer un signal d'alerte vers des moyens de commande du moteur (4) en cas de détection d'une telle situation de sous-vitesse,
**caractérisé en ce que** le dispositif de détection (2) comporte en outre des moyens de conversion (18) propres à convertir une partie (iₚ) du signal électrique de rotation (iᵣ) en un courant (iₐₗ) d'alimentation des moyens d'analyse (20), et des moyens pour appliquer le courant d'alimentation (iₐₗ) aux moyens d'analyse (20) pour leur alimentation électrique, et **en ce que** les moyens de détection (12) comportent d'une part un détecteur (32) comprenant au moins une spire (42) fixe par rapport au stator (38), d'axe magnétique (B-B) parallèle à l'axe longitudinal (X-X), et un élément magnétique (36) mobile en rotation avec le rotor (8) et au moins partiellement en regard de la ou chaque spire (42), l'élément magnétique (36) étant un aimant permanent propre à émettre un champ magnétique selon un axe d'émission (A-A) parallèle à l'axe longitudinal (X-X).

2. Système selon la revendication 1, **caractérisé en ce que** les moyens de conversion (18) sont propres à convertir la partie (iₚ) du signal électrique de rotation (iᵣ) en un courant d'alimentation (iₐₗ) continu.

3. Système selon la revendication 1 ou 2, caractérisé en ce les moyens d'analyse (20) sont propres à être alimentés uniquement par le courant d'alimentation (iₐₗ) provenant des moyens de conversion (18).

4. Système selon l'une quelconque des revendications précédentes, **caractérisé en ce que** le détecteur (32) comporte une pluralité de spires (42) électriquement reliées pour former une bobine (44).

5. Système selon la revendication 4, **caractérisé en ce que** la bobine (44) est réalisée dans un circuit imprimé (46) multicouche.

6. Véhicule comportant un système de ventilation selon l'une quelconque des revendications précédentes.

7. Véhicule selon la revendication 6, **caractérisé en ce qu'**il est un aéronef.

## Patentansprüche

1. Lüftungssystem, das einen Motor (4) und eine Vorrichtung (2) zum Erfassen einer Unterdrehzahl eines einen Stator (38) und einen um eine Längsachse (X-X) in Bezug auf den Stator (38) drehbeweglichen Rotor (8) aufweisenden Motors (4) aufweist, wobei die Erfassungsvorrichtung (2) Detektionsmittel (12), die geeignet sind, ein elektrisches Signal (iᵣ) der Drehung zu erzeugen, das für die Drehgeschwindigkeit des Rotors (8) repräsentativ ist, und elektronische Analysemittel (20) umfasst, die geeignet sind, das Signal (iᵣ) der Drehung zu analysieren, um eine Situation einer Unterdrehzahl zu detektieren, bei der die Drehgeschwindigkeit des Rotors (8) kleiner als eine vorbestimmte minimale Geschwindigkeit ist, die notwendig ist, damit das Lüftungssystem einen minimalen vorbestimmten Volumenstrom sicherstellt, der von dem Lüftungssystem gewährleistet werden muss, und um ein Warnsignal an die Mittel zur Steuerung des Motors (4) im Fall der Erfassung einer solchen Situation der Unterdrehzahl zu senden,
**dadurch gekennzeichnet, dass** die Erfassungsvorrichtung (2) außerdem Umwandlungsmittel (18), die geeignet sind, einen Teil (iₚ) des elektrischen Signals (iᵣ) der Drehung in einen Strom (iₐₗ) zur Versorgung der Analysemittel (20) umzuwandeln, und Mittel zum Aufbringen des Versorgungsstroms (iₐₗ) an die Analysemittel (20) für ihre elektrische Versorgung aufweist, und dass die Detektionsmittel (12) einerseits einen Detektor (32), der mindestens eine in Bezug auf den Stator (38) feststehende Windung (42) mit einer Magnetachse (B-B) parallel zur Längsachse (X-X) umfasst, und ein Magnetelement (36), das drehbeweglich mit dem Rotor (8) ist und zumindest teilweise gegenüber der oder jeder Windung (42) liegt, aufweist, wobei das Magnetelement (36) ein Permanentmagnet ist, der geeignet ist, ein Magnetfeld gemäß einer Emissionsachse (A-A) parallel zur Längsachse (X-X) abzugeben.

2. System nach Anspruch 1, **dadurch gekennzeichnet, dass** die Umwandlungsmittel (18) geeignet sind, den Teil (iₚ) des elektrischen Signals (iᵣ) der Drehung in einen Versorgungsgleichstrom (iₐₗ) umzuwandeln.

3. System nach Anspruch 1 oder 2, **dadurch gekennzeichnet, dass** die Analysemittel (20) geeignet sind, allein durch den Versorgungsstrom (i-ₐₗ), der von den Umwandlungsmitteln (18) herrührt, versorgt zu werden.

4. System nach einem beliebigen der vorhergehenden Ansprüche, **dadurch gekennzeichnet, dass** der Detektor (32) eine Mehrzahl von Windungen (42) aufweist, die elektrisch zur Bildung einer Spule (44) verbunden sind.

5. System nach Anspruch 4, **dadurch gekennzeichnet, dass** die Spule (44) in einem gedruckten mehrlagigen Schaltkreis (46) hergestellt ist.

6. Fahrzeug, das ein Lüftungssystem nach einem beliebigen der vorhergehenden Ansprüche aufweist.

7. Fahrzeug nach Anspruch 6, **dadurch gekennzeichnet, dass** es ein Luftfahrzeug ist.

## Claims

1. A ventilation system comprising a motor (4) and an underspeed detection device (2) of a motor (4) comprising a stator (38) and a rotor (8) movable in rotation around a longitudinal axis (X-X) relative to the stator (38), the detection device (2) comprising detection means (12) able to generate an electric rotation signal (iᵣ) representative of the speed of rotation of the rotor (8), and electronic analysis means (20) able to analyze the rotation signal (iᵣ) to detect an underspeed situation in which the speed of rotation of the rotor (8) is lower than a predetermined minimum speed that is necessary for the ventilation system to provide a predetermined minimum flow rate that must be provided by the ventilation system, and to send an alert signal to control means of the motor (4) if such an underspeed situation is detected,
**characterized in that** the detection device (2) further comprises conversion means (18) able to convert part (iₚ) of the electric rotation signal (iᵣ) into a power supply current (iₐₗ) of the analysis means (20), and means for applying the power supply current (iₐₗ) to the analysis means (20) to supply them with electricity, and **in that** the detection means (12) comprise on one hand a detector (32) comprising at least one turn (42) that is stationary relative to the stator (38), with a magnetic axis (B-B) parallel to the longitudinal axis (X-X), and a magnetic element (36) that is rotatable with the rotor (8) and at least partially across from the or each turn (42), the magnetic element (36) being a permanent magnet that is able to emit a magnetic field along an emission axis (A-A) parallel to the longitudinal axis (X-X).

2. The system according to claim 1, **characterized in that** the conversion means (18) are able to convert the part (iₚ) of the electric rotational signal (iᵣ) into a substantially DC power supply current (iₐₗ).

3. The system according to claim 1 or 2, **characterized in that** the analysis means (20) are able to be powered solely by the power supply current (iₐₗ) coming from the conversion means (18).

4. The system according to any one of the preceding claims, **characterized in that** the detector (32) comprises a plurality of turns (42) electrically connected to form a coil (44).

5. The system according to claim 4, **characterized in that** the magnetic element (44) is made from a multilayer printed circuit (46).

6. A vehicle comprising a ventilation system according to any one of the preceding claims.

7. The vehicle according to claim 6, **characterized in that** it is an aircraft.
